Europäisches Patentamt

European Patent Office

Office européen des brevets

(11) Publication number: **0 468 599 A1**

# EUROPEAN PATENT APPLICATION

(21) Application number: **91201956.9**

(22) Date of filing: **26.07.91**

(51) Int. Cl.⁵: **B60K 13/02**

(30) Priority: **27.07.90 IT 2110590**

(43) Date of publication of application:
**29.01.92 Bulletin 92/05**

(84) Designated Contracting States:
**AT CH DE ES FR GB LI**

(71) Applicant: **SAME S.p.A.**
**Viale F. Cassani, 14**
**I-24047 Treviglio Bergamo(IT)**

(72) Inventor: **Todeschini, Eugenio**
**Via Rillosi 11**
**I-24100 BERGAMO(IT)**

(74) Representative: **De Carli, Erberto et al**
**ING. BARZANO' & ZANARDO MILANO S.p.A.**
**Via Borgonuovo, 10**
**I-20121 Milano(IT)**

(54) **Fuel and air feed unit in an engine-driven vehicle, in particular a tractor.**

(57) To increase the fuel tank capacity particularly in a tractor, the tank (2') is provided with a cavity (12) for housing the engine air filter (3) within the overall outline of the tank, the filter (3) being fixed in the cavity (12) in such a manner as to leave the air intake port (10) and delivery port (11) of the filter free. The cavity (12) can pass through the tank (2') between its side walls (13, 14) and the wall of the cavity (12) can form a wall portion of the filter, which can consist simply of two endpieces (8', 9') fixed to the ends of the cavity (12) and housing the filter cartridge (6). The reduction in tank volume by virtue of the filter housing is compensated by the greater extension of the tank to the side of and/or above the engine because of the absence of the conventional filter.

Fig.3

EP 0 468 599 A1

This invention relates to a fuel and air feed unit in an engine-driven vehicle, in particular a tractor.

In tractors and similar vehicles, particularly agricultural tractors, it is known common practice to install the fuel tank in the front part of the vehicle, in front of the engine, and to use dry filters for the engine intake air, these filters consisting essentially of a cylindrical casing provided internally with a filter cartridge and being located generally in the region between the tank and the engine in a position such as to allow the necessary air to enter.

In addition to requiring special filter fixing means appropriate to the shape of the elements and the available space, this arrangement, especially in the case of tractors of compact type used for example for orchards or vineyards, presents considerable space availability problems, which sometimes considerably limit the capacity of the fuel tank.

An object of the present invention is to overcome this problem and limitation, by reducing the restraints deriving from the current situation and providing a fuel and air feed unit which enables the tank dimensions to be increased for equal dimensions of the other components of the engine compartment, and in addition allows easier filter fitting.

A further object of the invention is to indicate a particular feed unit arrangement which allows simplification of the filter structure and enables the filter to be constructed by a special method which results in a further overall size reduction.

These and further objects which will be more apparent from the ensuing description are attained by a fuel and air feed unit in an engine-driven vehicle, in particular a tractor, comprising a fuel feed tank and an engine air filter associated with the tank and provided internally with a filter cartridge and also provided with air intake and delivery ports, characterised in that the tank has a shaped wall defining a filter housing cavity in a region substantially within the overall outline of the tank, the filter being fixed within said cavity while leaving said ports free. Thus in a unit according to the invention, the tank is shaped to house the filter in its interior in a suitably separated manner, whereas the tank capacity, apparently reduced because of the presence of the filter, can be increased beyond the outline of the filter, to utilize the external space previously occupied by it, plus the surrounding space, which was previously unusable in practice because it was too fragmentary.

According to one development of the invention, that wall of the tank defining the cavity housing the filter can itself constitute the filter wall or a portion of this wall, the filter then consisting simply of two endpieces applied to the tank on opposite sides and housing the filter cartridge between them, and in addition being provided with the air intake and delivery ports. This thus represents a simplification in the construction of the filter and a further reduction in overall size, as the endpieces can be formed in a single piece complete with connection nozzles or elbows.

Further details and advantages of the invention will be more apparent from the following description of preferred but not exclusive embodiments of the invention, illustrated by way of example on the accompanying drawings, in which:

Figure 1 is a schematic view of the front part of a tractor with the fuel tank and filter in the commonly used arrangement;

Figure 2 shows a typical dry filter currently in use in tractors and also substantially usable in a unit according to the present invention;

Figure 3 is a partial section through a tank-filter unit of the present invention taken on the line III-III of Figure 5 and showing two different filter arrangements, one in full view and the other in section;

Figure 4 shows a modified filter endpiece, formed integrally with a connection elbow;

Figure 5 shows in schematic form the front part of a tractor provided with a unit according to the invention, from which the extent to which the tank capacity can be increased can be well seen.

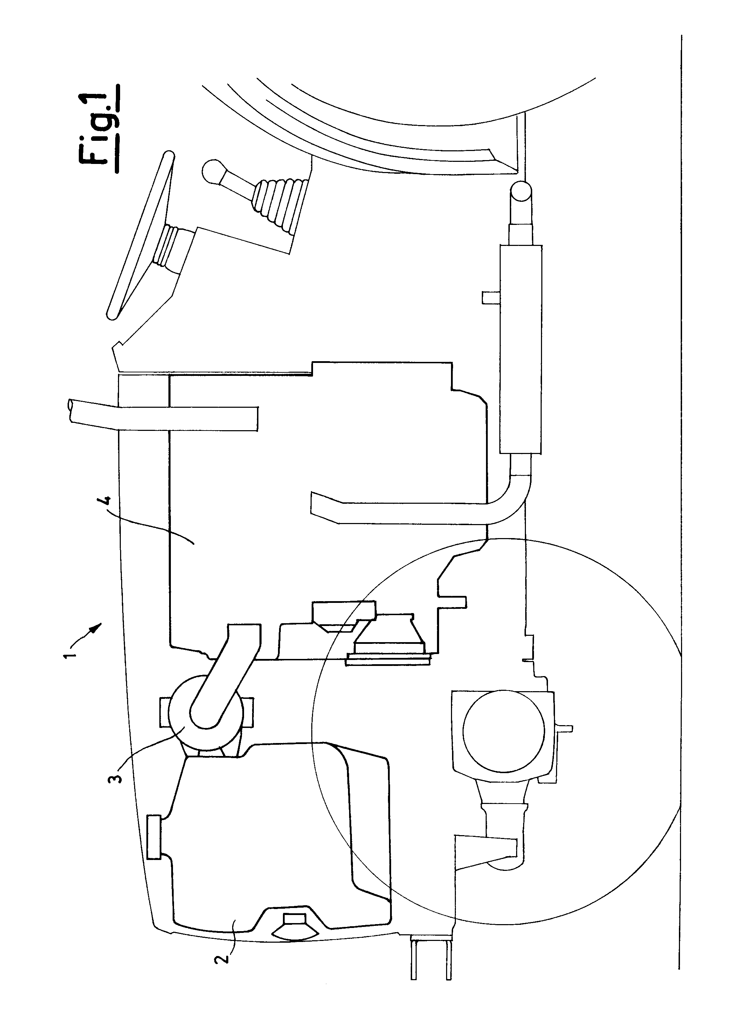

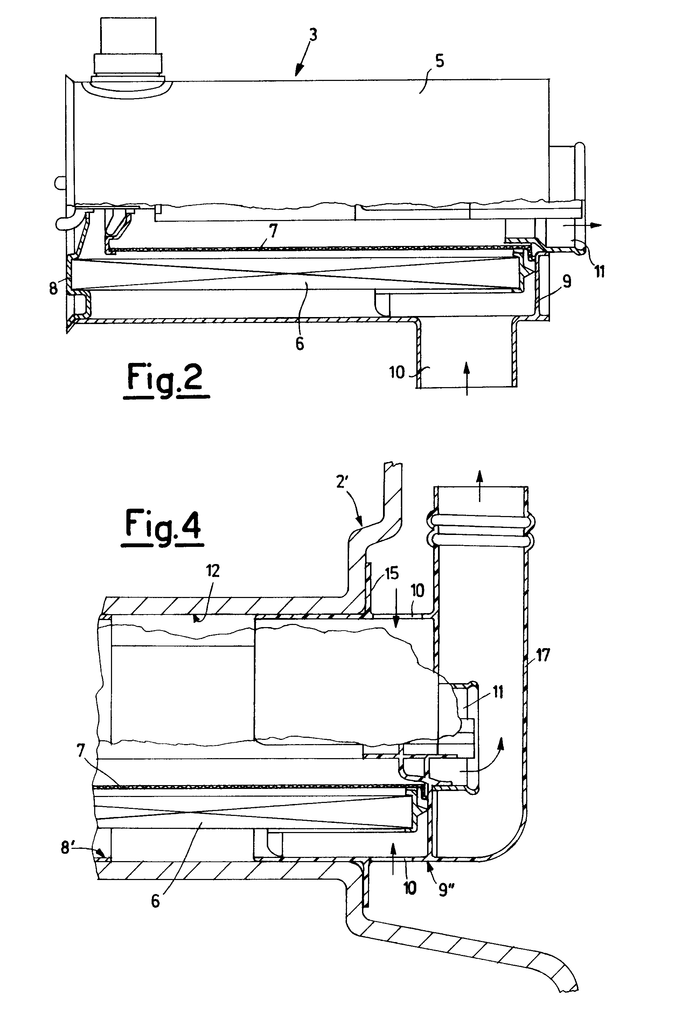

With reference firstly to Figures 1 and 2, the reference numeral 1 indicates overall an agricultural tractor comprising in the usual manner in its front part a fuel tank 2 supporting an air filter 3 of dry type, the tank 2 and filter 3 being positioned to the front of the tractor engine 4. As can be seen, the position of the filter 3, which is substantially obligatory because of the need to directly draw in the air to be filtered and to feed the filtered air directly to the engine, penalizes the tank 2 by placing limits on its capacity.

The filter 3 consists essentially of a cylindrical jacket 5 containing a filter cartridge 6 and possibly a further filtering wall 7, all being enclosed between two endpiece portions 8 and 9 in known manner. The jacket 5 is provided with a port or nozzle 10 for air intake, and the endpiece 9 is provided with a delivery port or nozzle 11, for connection to the intake manifold of the engine 4.

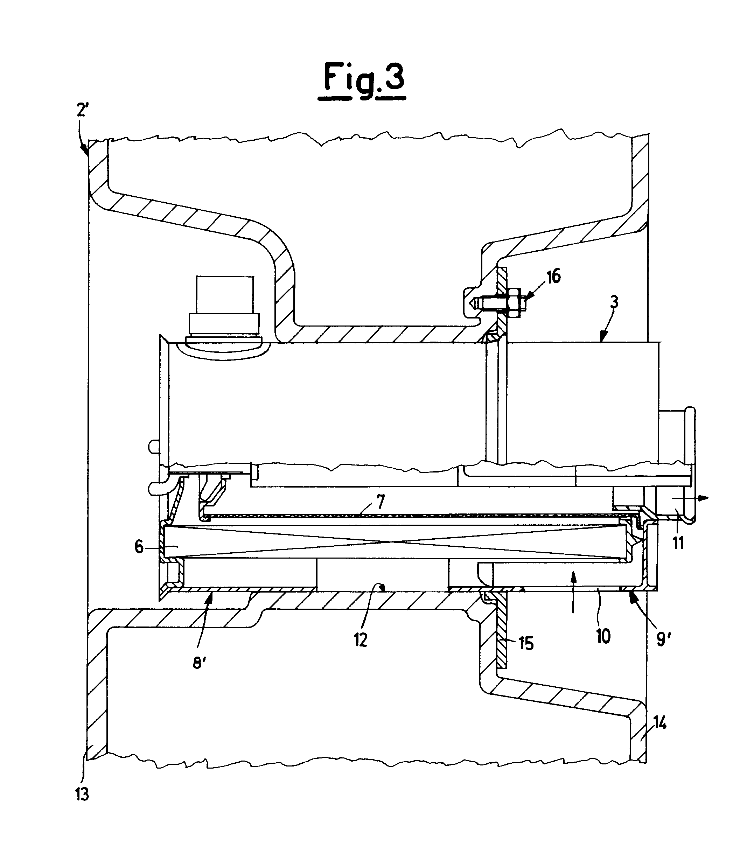

To enable the tank capacity to be increased, the tank 2' (Figure 3) according to the present invention comprises a shaped wall defining a cavity 12 for housing the filter 3 in a region within the overall outline of the tank. The cavity 12 is advantageously of cylindrical form with its cross-section and transverse dimensions equal to those of the filter 3, and extends in a direction transverse to and totally through the tank 2' between its opposite walls 13 and 14, whereas those parts of the side walls 13 and 14 of the tank 2' adjacent to the housing cavity 12 are of re-entering formation to maintain the intake port 10 and delivery port 11 of the air filter 3 free. In other words, as can be seen from the full-view half of the filter of Figure 3, part of the filter 3 is enclosed as a form fit in the cavity 12 defined by the tank 2', substantially in a position corresponding to the conventional position, however the tank 2' has an increased volume, as can be seen in Figure 5, by amply extending into a previously unused space above and in front of the engine 4.

It will be apparent that there are no particularly restrictions on the shape of the tank, it having simply to contain a liquid, so that its shape can be such as to occupy almost the entire volume available in front of the engine and above it, free of the filter. Comparing Figures 1 and 5 it can be seen that the useful volume of the tank 2' is substantially greater than the useful volume of the conventional tank 2.

It should be noted that as the tank 2' is generally of plastics construction, the cavity 12 can be advantageously formed by rotoforming or an equivalent method, and hence simply and economically.

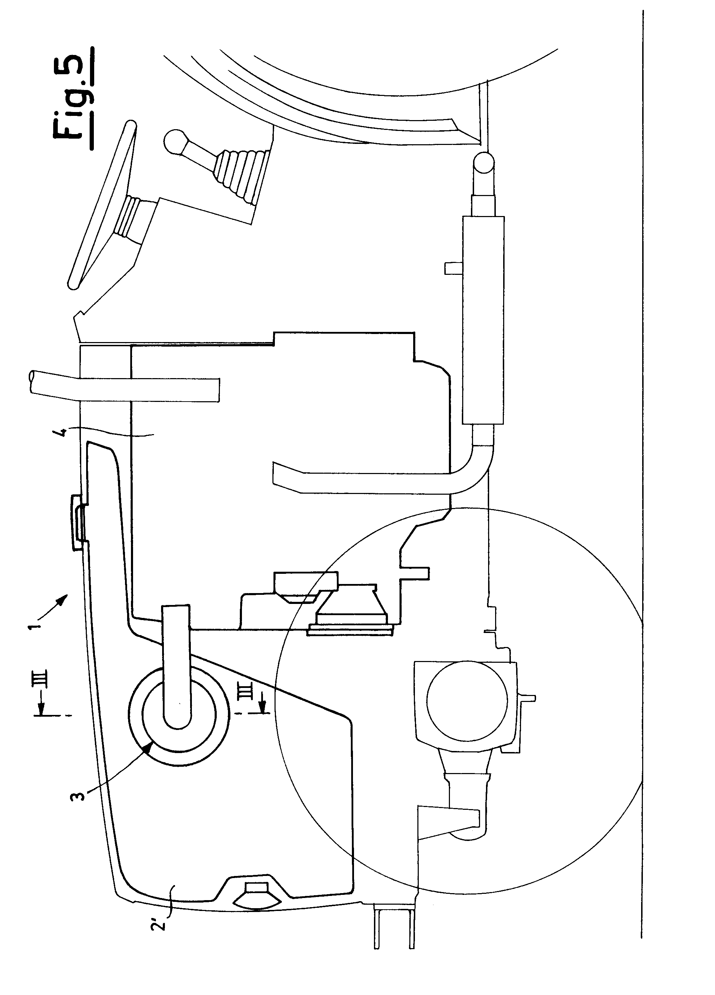

According to a further development of the invention, the wall of the housing cavity 12 in the tank 2' can itself form a wall or wall portion of the filter, as shown in the lower part of the sectional view in Figure 3 and in Figure 4. In this case, the filter consists only of two opposing endpieces 8' and 9' fixed, for example glued, to the tank 2' at the opposing ends of the cavity 12 and retaining between them the filter cartridge 6 and the other elements of the normal dry filter.

In particular, the endpiece 9' can be provided with a flanged portion 15 fixable to the tank 2' by studs 16. In their remaining parts the endpieces 8' and 9' can be identical to the end portions of the usual filter 3.

With a filter structure of this type it is advantageously possible to further reduce the overall dimensions by forming the delivery endpiece in a single piece with a delivery elbow, as shown in Figure 4. In this case, the endpiece 9'' has its intake ports 10 to the side of an elbow connection part 17. Providing the elbow in one piece with the endpiece enables the axial dimension of the filter to be reduced below that in which the elbow is fitted to the filter outlet nozzle (11, Figure 3), or enables the axial dimension of the cavity 12 of the tank 2' to be increased for equal dimensions, so increasing the tank capacity. This also eliminates one connection point, a potential source of dust entry to the filter.

The endpieces 8' and 9' or 9'' can be of plastics or cast light alloy construction.

It will be apparent from the description that with a feed unit according to the invention, comprising an integral tank and filter, the tank capacity can be increased for equal available space in the engine compartment, and the filter construction and installation can be simplified.

Numerous modifications are possible within the inventive concept. For example the filter could be installed in a cavity situated on the outside of the tank or with its axis in the longitudinal direction of the tank or tractor. The tank could have a blind housing cavity for the filter, in which case however this latter would have to be adequately shaped with regard to air intake and delivery and the fixing of the filter cartridge. A feed unit with the characteristics of the present invention could also be applied to engine-driven vehicles other than tractors.

## Claims

1. A fuel and air feed unit in an engine-driven vehicle, in particular a tractor, comprising a fuel feed tank and an engine air filter associated with the tank and provided internally with a filter cartridge and also provided with air intake and delivery ports, characterised in that the tank has a shaped wall defining a filter housing cavity in a region substantially within the overall outline of the tank, the filter being fixed within said cavity while leaving said ports free.

2. A feed unit as claimed in claim 1, characterised in that said cavity is cylindrical.

3. A feed unit as claimed in claim 1 or 2, characterised in that said cavity extends in a direction transverse to the tank.

4. A feed unit as claimed in one of the preceding claims, characterised in that said cavity extends through the tank between opposing side walls thereof.

5. A feed unit as claimed in one of the preceding claims, characterised in that the tank comprises re-entering side walls at said cavity.

6. A feed unit as claimed in one of the preceding claims, characterised in that the cavity wall defines a wall or wall portion of the filter, the filter consisting substantially of two opposing endpieces rigidly connected to said wall and comprising said intake and delivery ports, and housing said filter cartridge between them.

7. A feed unit as claimed in claim 6, characterised in that said endpieces are glued to said wall portion.

8. A feed unit as claimed in one of the preceding claims, characterised in that at least one of said endpieces has a flanged portion for fixing to the tank.

9. A feed unit as claimed in one of the preceding claims, characterised in that one of said endpieces comprises an elbow part defining a delivery connector for the air.

10. A feed unit as claimed in claim 9, characterised in that said elbow part is in one piece with said endpiece.

11. A feed unit as claimed in claim 9 or 10, characterised in that said endpiece comprises intake ports to the side of said elbow part.

12. A feed unit as claimed in one of claims 1 to 5, characterised in that the filter comprises a jacket housed with a form fit in said cavity, and two endpiece portions rigid with said jacket.

13. A feed unit as claimed in one of the preceding claims, characterised in that the tank comprises an oblong portion extending upperly beyond the filter housing region.

Fig.1

**Fig.2**

**Fig.4**

# <u>Fig.3</u>

Fig.5

EP 0 468 599 A1

**European Patent Office**

**EUROPEAN SEARCH REPORT**

Application Number

**EP 91 20 1956**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-C-958 970   (BOCKSTETTE, W.)<br>* the whole document * * | 1,4 | B 60 K 13/02 |
| A | | 2,3,9-13 | |
| A | US-A-3 934 992   (THOMPSON, TERRENCE V.)<br>* the whole document * *<br>– – – | 1,2,8,9,<br>12,13 | |
| A | FR-A-884 872   (BMW AG)<br>* the whole document * *<br>– – – | 1-6,8,12 | |
| A | FR-A-1 083 063   (SÜDDEUTSCHES ILO WERK)<br>* page 2, line 22 - line 36; claim 1G; figures 4,5 * *<br>– – – – – | 1 | |

| | |
|---|---|
| | TECHNICAL FIELDS SEARCHED (Int. Cl.5) |
| | B 60 K<br>F 02 M |

The present search report has been drawn up for all claims

| Place of search | Date of completion of search | Examiner |
|---|---|---|
| The Hague | 31 October 91 | TOPP-BORN S. |